(19) Europäisches Patentamt / European Patent Office / Office européen des brevets

(11) **EP 4 389 835 A1**

(12) # EUROPEAN PATENT APPLICATION

(43) Date of publication:
**26.06.2024 Bulletin 2024/26**

(21) Application number: **22315338.8**

(22) Date of filing: **20.12.2022**

(51) International Patent Classification (IPC):
**C09D 11/52** [(2014.01)]    **C09D 11/033** [(2014.01)]
**C09D 11/037** [(2014.01)]

(52) Cooperative Patent Classification (CPC):
**C09D 11/033; C09D 11/037; C09D 11/106;
C09D 11/52**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Genes'Ink SA
13790 Rousset (FR)**

(72) Inventor: **The designation of the inventor has not
yet been filed**

(74) Representative: **LLR
2, rue Jean Lantier
75001 Paris (FR)**

(54) **INK BASED ON SILVER NANOPARTICLES**

(57)    The present invention relates to ink formulations based on silver nanoparticles which can advantageously be used in Electromagnetic Interference ("EMI") shielding coating of semiconductor chips, in particular of Epoxy Molding Compounds ("EMC") chips; in particular, the present invention relates to such ink formulations based on silver nanoparticles, said inks being stable, with improved conductivity and particularly suitable for being applied by spray.

**EP 4 389 835 A1**

**Description**

The present invention relates to ink formulations based on silver nanoparticles which can advantageously be used in Electromagnetic Interference ("EMI") shielding coating of semiconductor chips, in particular of Epoxy Molding Compounds ("EMC") chips; in particular, the present invention relates to such ink formulations based on silver nanoparticles, said inks being stable, with improved conductivity and particularly suitable for being applied by spray.

The present invention also relates to the use of said inks in the field of Electromagnetic Interference ("EMI") shielding coating by spraying said inks on semiconductor chips, in particular on Epoxy Molding Compounds ("EMC") chips.

Similar inks have already been described by the Applicant in its patent applications WO 20160184979 (A1) published on 24 November 2016 and WO2020120252 (A1) published on 18 June 2020, said inks being particularly suitable for being applied respectively by serigraphy and inkjet.

The development of conductive nanoparticles makes it possible to afford new uses and to envisage a multitude of new applications. Nanoparticles have a very large surface area/volume ratio and substitution of their surface with surfactants entails a change in certain properties and the possibility of dispersing them.

Their small sizes can lead in certain cases to quantum confinement effects. The term "nanoparticles" is used when at least one of the dimensions of the particle is less than or equal to 250 nm. The nanoparticles may be beads (from 1 to 250 nm), rods (L < 200 to 300 nm), wires (a few hundred nanometres or even a few microns), discs, stars, pyramids, tetrapods, cubes or crystals when they have no predefined shape.

Several processes have been developed for synthesizing conductive nanoparticles. Among these, mention may be made in a non-exhaustive manner of:

- physical processes: chemical vapor deposition (CVD) when a substrate is exposed to volatilized chemical precursors which react or decompose on its surface. This process generally leads to the formation of nanoparticles whose morphology depends on the conditions used; thermal evaporation; molecular beam epitaxy when atoms which will constitute the nanoparticles are bombarded at high speed into the substrate (where they become bound), in the form of a gas stream;

- chemical or physicochemical processes: microemulsion; laser pulse in solution, when a solution containing a precursor is irradiated with a laser beam. The nanoparticles become formed in the solution along the laser beam; synthesis by microwave irradiation; surfactant-assisted oriented synthesis; ultrasound-mediated synthesis; electrochemical synthesis; organometallic synthesis; synthesis in alcoholic medium.

Physical syntheses consume more starting materials with significant losses. They generally take time and require high temperatures, which makes them unattractive for passing to industrial-scale production. This makes them unsuitable for certain substrates, for example flexible substrates. Furthermore, the syntheses are performed directly on the substrates in small-sized frameworks. These production methods prove to be relatively rigid and do not allow production on large-sized substrates; they may, however, be entirely suitable for the production of the silver nanoparticles used in the ink formulations according to the present invention.

Chemical syntheses, for their part, have many advantages. The first is that of working in solution: the conductive nanoparticles thus obtained are already dispersed in a solvent, which facilitates the storage and use thereof. In the majority of cases, the nanoparticles are not attached to a substrate at the end of the synthesis, which affords greater latitude in their use. This opens the way to the use of substrates of different sizes and of different nature. These methods also allow better control of the starting materials used and limit the losses. Correct adjustment of the synthetic parameters leads to good control of the synthesis and the growth kinetics of the conductive nanoparticles. This makes it possible to ensure good reproducibility between batches and also good control of the final morphology of the nanoparticles. The ability to chemically produce nanoparticles rapidly and in large amount while at the same time ensuring a certain flexibility as regards the product makes it possible to envisage industrial-scale production. The production of dispersed conductive nanoparticles opens numerous perspectives regarding their customization. It is thus possible to adjust the nature of the stabilizers present at the surface of the nanoparticles according to the intended application. Specifically, various methods exist for wet deposition. In each case, particular attention must be paid to the physical properties of the ink such as the surface tension or the viscosity. The adjuvants employed during the formulation of the nanoparticle-based ink will make it possible to adhere to the requirements of the deposition method. However, the surface ligands will also have an impact on these parameters and their choice proves to be decisive. It is thus important to have an overall view of the ink in order to combine all the participating elements - nanoparticles, solvent, ligands and adjuvants - and to obtain a product that is compatible with the targeted applications.

The object of the present invention is to overcome one or more drawbacks of the prior art by providing an ink that is suitable for contactless spraying and improved homogeneous coating in order to be used as Electromagnetic Interference ("EMI") shielding coating. Said inks are characterized by a set of improved properties, among which mention will be made for illustrative purposes of:

- greater stability, e.g. stability over time superior to that of the current inks, and/or

- non-toxicity of the solvents and of the nanoparticles, and/or

- an improved surface tension, and/or

- conservation of the intrinsic properties of the nanoparticles after application by spray, and/or

- better annealing (homogeneity of the deposit), and/or

- improved adhesion on the substrate, and/or

- absence of generation of bubbles/foams after spraying, and/or

- excellent conductivity for annealing temperatures generally between 120°C and 220°C.

Although the inks described in WO 2016/184979 (A1) and WO2020120252 (A1) already meet a large number of the requirements set hereinabove, the Applicant has managed to develop new ink compositions which make it possible to further improve both their performance and also their ability to be sprayed; and in particular to be used in the field of Electromagnetic Interference ("EMI") shielding coating by spraying said inks on semiconductor chips, in particular on Epoxy Molding Compounds ("EMC") chips.

INK

The present invention thus relates to an ink composition comprising at least

- 25% by weight of silver nanoparticles,

- 15% by weight of aliphatic monohydric alcohol,

- 10% by weight of polyol and/or polyol derivative, and

- 5% by weight of terpenic alcohol,

    less than 0.5% by weight of water, and

    the sum of silver nanoparticles, aliphatic monohydric alcohol, polyol and polyol derivative, terpenic alcohol and water constituting at least 90% by weight of the ink composition.

The present invention also relates to the synthesis of said ink composition.

The present invention also relates to the use of said ink composition as Electromagnetic Interference ("EMI") shielding by spraying it on a semiconductor chip, in particular on Epoxy Molding Compound ("EMC") chip.

The present invention also relates to a process for spraying said ink composition as Electromagnetic Interference ("EMI") shielding on a semiconductor chip, in particular on Epoxy Molding Compound ("EMC") chip.

Figures

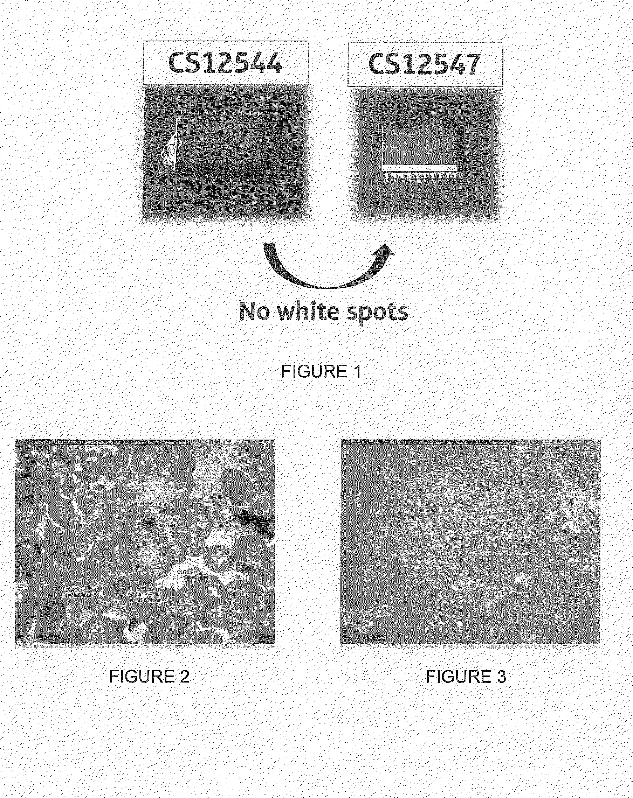

    Figure 1 shows the visual differences in homogeneity of the spray deposit on EMC-chip between the sprayed formulation S-CS91544 (comparative - left) and S-CS91547 (invention - right).

    Figures 2 and 3 show the microscopic differences in homogeneity of the spray deposit on EMC-chip between the sprayed formulation S-CS91544 (comparative - figure 2) and S-CS91547 (invention - figure 3).

The viscosity of the ink composition is an important property for EMI, for improved spray-ability and flowability reasons which must guarantee a high level of uniformity and homogeneity of the electromagnetic wave shielding film on all shielded surfaces of the semiconductor chip. The viscosity measured at 20°C of the ink according to the present invention is generally between 5 and 100 mPa.s, for example between 7.5 and 50 mPa.s, for example between 9 and 25 mPa.s.

The Applicant has discovered that the ink composition based on silver nanoparticles according to the present invention with the combination of compounds claimed and their respective concentration makes it possible to obtain an ink with improved properties, in particular improved stability, excellent spray-ability, and also improved conductivity in a range of viscosities that are particularly suitable for uses in the fields of contactless spraying for EMI shielding; in particular, the ink formulations based on silver nanoparticles according to the present invention have a set of improved properties, among which mention will be made for illustrative purposes of:

- greater stability, e.g. stability over time superior to that of the current inks, and/or

- non-toxicity of the solvents and of the nanoparticles, and/or

- an improved surface tension, and/or

- conservation of the intrinsic properties of the nanoparticles after application by spray, and/or

- better annealing (homogeneity of the deposit after spraying), and/or

- improved adhesion on the substrate, and/or

- absence of generation of bubbles/foams after spraying, and/or

- excellent conductivity for annealing temperatures generally between 120°C and 220°C, with marked improvements between 150°C and 180°C.

The inks based on conductive nanoparticles according to the present invention may advantageously be sprayed on all types of supports. Examples that will be mentioned include the following supports: paper, polymers and polymer derivatives, composite materials, organic materials, and/or inorganic materials; in particular, the claimed inks are particularly suitable for EMI shielding of integrated circuit ("IC") packaging, e.g. of Epoxy Molding Compounds ("EMC"). Indeed, most of these packages are molded out of an epoxy plastic that provides adequate protection of the semiconductor devices, and mechanical strength to support the leads and handling of the IC package. Illustrative examples of such plastic are cresol-novolaks, siloxane polyimide, polyxylylene, silicones, polyepoxides and/or bisbenzocyclo-butene materials.

In one embodiment of the present invention a semiconductor package is provided, including an electromagnetic waves shielding layer based on the claimed ink for protecting a semiconductor chip in the semiconductor package from external factors and shielding electromagnetic waves.

As the market for electronic products expands, demand for more functionality and smaller portable devices have rapidly increased, and, thus, technology has led to miniaturization and weight reduction of electronic components in the electronic products. In this regard, not only are sizes of the various electronic components reduced, but several discrete semiconductor chips may be put in one semiconductor package.

Although this does not constitute a preferred embodiment according to the present invention, the semiconductor package may further include, between the semiconductor chip and the shielding layer, an insulating layer including a thixotropic material or a hot melt material. The thixotropic material may include at least one of composite fine silica, bentonite, fine particles of surface treated calcium carbonate, hydrogenated castor oil, metal soap, aluminum stearate, polyamide wax, oxidized polyethylene, and linseed polymerized oil. The hot melt material may include at least one of polyurethane, polyurea, polyvinyl chloride, polystyrene, acrylonitrile butadiene styrene, polyamide, acrylic, and polybutylene terephthalate. The thixotropic material or the hot melt material may be cured by ultraviolet curing or heat curing.

In an embodiment of the present invention, the semiconductor chip package to be shielded is a three-dimensional object with a top and lateral faces which may advantageously be treated with our claimed inks; as this three-dimensional object may be made of layers of different materials, it is critical that the shielding provides adequate adhesion and uniformity of the sprayed layers on all the faces to be shielded. Said materials include not only the epoxy-based compounds cited hereinabove but also, as illustrative examples, copper, polyimide (e.g. Kapton), silicon, silicon-based compounds, silica, ...

The present invention also relates to a process of spraying our claimed ink composition as Electromagnetic Interference ("EMI") shielding on at least two different materials of a semiconductor chip package wherein the package comprises essentially Epoxy Molding Compound ("EMC") together with copper, polyimide (e.g. Kapton), silicon, silicon-based compounds, or silica.

Our claimed silver nanoparticle-based ink can advantageously spray coat the electronic components to protect the devices from electro-magnetic interferences. This technique allows to create an efficient EMI shielding directly on the chip by one-step spraying preferably before pick-and-placing the component onto the electronic flexible circuit board. A very thin layer of sprayed ink can be used to reach high shielding efficiency which allows to reduce the weight and the size of the final electronic device. Amongst the prior technologies used for such shielding, one can cite the metal housing directly added to the chips which need shielding which has several drawbacks because it requires large process lines and has a heavy impact on the environment. It also brings more weight to the system and takes place on the printed circuit board ("PCB"). Another existing solution consists in metallization by physical vapor deposition (PVD). This method is lighter for the final device but requires large investments on production lines since it is a complex process.

Our claimed solution on the other hand is compatible with high volume, industrial production equipment (e.g. ultrasonic spray coating). Our claimed inks have been optimized and fine-tuned to exhibit strong adhesion on EMC, copper, PCB and Si wafer with homogeneous and ultra-thin shielding layer on top and sidewalls of the external package. The ink shows better electrical performances allowing to create a better EMI shield on top of chips compared to copper foil. In addition, our claimed coating solution is sufficiently resistant to pass electronic post-treatment standards, like solvent cleaning bath, durability/reliability tests under environmental conditions, etc. Our claimed solution is environmentally friendly as it uses non-toxic and non-carcinogenic, mutagenic and reprotoxic (CMR) solvents for its formulation. It also requires low investments to adapt the existing production lines.

Silver Nanoparticles

The silver nanoparticles constitute at least 25% by weight of the ink composition according to the present invention. In particular, the silver nanoparticles content in the ink composition according to the present invention is at least 30% by weight, for example at least 35% by weight; it is preferably less than 60% by weight, for example less than 50% by weight (weight of silver nanoparticles divided by weight of ink composition).

According to one embodiment variant of the present invention, the objectives of the present invention are particularly achieved when compound "a" consists of silver nanoparticles with dimensions of between 1 and 250 nm. The size of the nanoparticles is defined as being the mean diameter of the particles containing silver, with the exclusion of the stabilizers, as determined, for example, by transmission electron microscopy.

According to one embodiment variant of the present invention, the silver nanoparticles are of spheroidal and/or spherical shape. For the present invention and the claims that follow, the term "of spheroidal shape" means that the shape resembles that of a sphere but it is not perfectly round ("quasi-spherical"), for example an ellipsoid shape. The shape of the nanoparticles is generally identified by means of photographs taken with a microscope. Thus, according to this embodiment variant of the present invention, the nanoparticles have diameters of between 1 and 250 nm.

According to one embodiment variant of the present invention, the silver nanoparticles are in the form of beads (from 1 to 250 nm), rods (L < 200 to 300 nm), wires (a few hundred nanometres or even a few microns), cubes, platelets or crystals when they do not have a predefined form.

According to a particular embodiment of the present invention, the silver nanoparticles have been synthesized beforehand by physical synthesis or chemical synthesis. Any physical or chemical synthesis may be used in the context of the present invention. In one particular embodiment according to the present invention, the silver nanoparticles are obtained via a chemical synthesis which uses as silver precursor an organic or inorganic silver salt. Non-limiting examples that will be mentioned include silver acetate, silver nitrate, silver carbonate, silver phosphate, silver trifluorate, silver chloride, silver perchlorate, alone or as a mixture. According to one variant of the present invention, the precursor is silver acetate.

Thus, the nanoparticles that are preferentially used in the present invention are characterized by D50 values which are preferentially between 1 and 250 nm irrespective of their method of synthesis (physical or chemical); they are also preferably characterized by a monodisperse (homogeneous) distribution without aggregates. D50 values of between 10 and 150 nm for spheroidal silver nanoparticles may also be advantageously used.

Aliphatic Monohydric Alcohol

The aliphatic monohydric alcohol constitutes at least 15% by weight of the ink composition according to the present invention. In particular, the content of aliphatic monohydric alcohol in the ink composition according to the present invention is at least 20% by weight, for example at least 25% by weight; it is preferably less than 40% by weight, for example less than 30% by weight (weight of aliphatic monohydric alcohol divided by weight of ink composition).

The aliphatic monohydric alcohol is preferably selected from the group consisting of ethanol, propanol, butanol, pentanol and hexanol and also isomers thereof (for example isopropanol, n-butanol, tert-butanol), and/or a mixture of two or more of said aliphatic monohydric alcohols. Isopropanol is particularly suitable for the EMI shielding spray use of the ink.

Polyol and/or Polyol Derivative

The polyol and polyol derivative constitutes at least 10% by weight of the ink composition according to the present invention. In particular, the content of polyol and polyol derivative in the ink composition according to the present invention is at least 15% by weight, for example at least 19% by weight; it is preferably less than 35% by weight, for example less than 27% by weight (weight of polyol and polyol derivative divided by weight of ink composition).

The polyol and/or polyol derivative is preferably characterized by a boiling point of less than 260°C. Examples that will be mentioned include glycols (for example ethylene glycol, propylene glycol, diethylene glycol, trimethylene glycol, 1,3-butylene glycol, 1,2-butylene glycol, 2,3-butylene glycol, pentamethylene glycol, hexylene glycol, etc.), and/or glycol ethers (for example glycol monoethers or diethers, among which examples that will be mentioned include ethylene glycol propyl ether, ethylene glycol butyl ether, ethylene glycol phenyl ether, propylene glycol phenyl ether, diethylene glycol methyl ether, diethylene glycol ethyl ether, diethylene glycol propyl ether, diethylene glycol butyl ether, propylene glycol methyl ether, propylene glycol butyl ether, propylene glycol propyl ether, dipropylene glycol monomethyl ether, ethylene glycol dimethyl ether, ethylene glycol diethyl ether, ethylene glycol dibutyl ether, glymes, diethylene glycol diethyl ether, dibutylene glycol diethyl ether, diglymes, ethyl diglyme, butyl diglyme), and/or glycol ether acetates (for example 2-butoxyethyl acetate, diethylene glycol monoethyl ether acetate, diethylene glycol butyl ether acetate, propylene glycol methyl ether acetate), and/or a mixture of two, three or more of said abovementioned solvents. Dipropylene glycol monomethyl ether, also known under the name Dowanol DPM, 2-(2-butoxyethoxy)ethan-1-ol, also known under the name butyl carbitol, and Propylene glycol methyl ether acetate also known under the abbreviation PGMEA, are solvents that are particularly suitable for the formulations according to the present invention; in a preferred embodiment according to the present invention, the ink comprises a mixture of these three solvents.

Terpenic alcohol

The terpenic alcohol constitutes at least 5% by weight of the ink composition according to the present invention. In particular, the content of terpenic alcohol in the ink composition according to the present invention is at least 6% by weight, for example at least 8% by weight; it is preferably less than 18% by weight, for example less than 15% by weight (weight of terpenic alcohol divided by weight of ink composition).

The terpenic alcohol is preferably selected from menthol, nerol, cineol, lavandulol, myrcenol, terpineol (alpha-, beta-, gamma-terpineol, and/or terpinen-4-ol; preferably alpha-terpineol), isoborneol, citronellol, linalool, borneol, geraniol, and/or a mixture of two or more of said alcohols; a mixture of alpha-terpineol and of gamma-terpineol has proven to be particularly suitable for the formulations according to the present invention.

Water

Water constitutes less than 0.5% by weight of the ink composition according to the present invention(weight of water divided by weight of ink composition).

According to an embodiment of the present invention the ink does not integrate water into its composition. However, as some of the constituents of the ink can tolerate traces of water as a function of their degree of purity, it is understood that the sum of these corresponding traces of water are acceptable in the claimed inks. Therefore, the content of water in the final ink depends in general essentially on the content of water of the solvents used for its preparation. According to a particular embodiment of the present invention the water content in the ink composition according to the present invention is less than 0.25% by weight, for example less than 0.1% by weight or even nil.

According to a preferred embodiment of the present invention, with the exception of traces of water possibly present in the compounds of the formulation/preparation of the ink, water is not added during the formulation of the claimed ink compositions.

Adhesion promoter

According to one embodiment variant of the present invention, the ink composition also comprises at least one adhesion promoter whose concentration will preferably be greater than 0.1% by weight, preferably greater than 0.25% by weight, for example greater than 0.5% by weight of the ink composition; it is preferably less than 2.5% by weight of the ink composition (weight of adhesion promoter divided by weight of ink composition). Examples of adhesion promoters that will be mentioned include vinylpyrrolidone/vinyl acetate copolymers, acrylic polymers, silanes, siloxanes and/or polysiloxanes, the aim of which is to improve the resistance to various types of mechanical stress, for example adhesion to numerous substrates; 30:70 to 70:30 (monomer ratio VP/VA) linear random copolymer of N-vinyl-2-pyrrolidone and vinyl acetate are the preferred adhesion promoters, for example a 60:40 linear random copolymer of N-vinyl-2-pyrrolidone and vinyl acetate. According to one preferred embodiment of the present invention the ink composition comprises at least 0.7% by weight of vinylpyrrolidone/vinyl acetate copolymer.

A particular example of preparation of the ink according to the present invention is described for illustrative purposes below:

The optional adhesion promoter is preferably first dissolved in one of the solvents in a first step. The silver nanoparticles are then added to this mixture with the rest of solvents and stirring is continued for 3 hours. Ultrasonication is then performed for 15 minutes before finishing with a filtration step on glass microfibers filter having a cut off of 1 $\mu$m.

An additional advantage of the ink according to the present invention lies in the fact that its preparation may be performed under non-restrictive pressure and/or temperature conditions, for example under pressure and/or temperature conditions close or identical to normal or ambient conditions. It is preferable to remain at less than 40% of the normal or ambient pressure and/or temperature conditions. For example, the Applicant has found that it was preferable to maintain the pressure and/or temperature conditions during the preparation of the ink at values oscillating at a maximum of 30%, preferably of 15%, around the values for normal or ambient conditions. Controlling these pressure and/or temperature conditions may thus be advantageously included in the ink preparation device so as to meet these conditions. This advantage associated with preparation of the ink under non-restrictive conditions is obviously also reflected by facilitated use of said inks.

According to one embodiment of the present invention, the ink composition comprises at least

- 25% by weight of silver nanoparticles,

- 15% by weight of aliphatic monohydric alcohol,

- 10% by weight of polyol and/or polyol derivative,

- 5% by weight of terpenic alcohol, and

- 0.5% by weight of vinylpyrrolidone/vinyl acetate copolymer,

less than 0.5% by weight of water,

the sum of all the above defined compounds constituting at least 95% by weight of the ink composition. According to a particular variant of the present invention, the sum of all the above defined compounds will preferably constitute at least 97.5% by weight, at least 98% by weight, at least 99% by weight or even 100% by weight of the final ink.

According to one embodiment of the present invention, the silver ink may also optionally comprise an antioxidant. Examples of antioxidants that will be mentioned include:

- ascorbic acid or vitamin C (E300), sodium ascorbate (E301), calcium ascorbate (E302), 5,6-diacetyl L-ascorbic acid (E303), 6-palmityl L-ascorbic acid (E304);

- citric acid (E330), sodium citrate (E331), potassium citrate (E332) and calcium citrate (E333);

- tartaric acid (E334), sodium tartrate (E335), potassium tartrate (E336) and potassium sodium tartrate (E337);

- butylhydroxyanisole (E320) and butylhydroxytoluene (E321);

- octyl gallate (E311) or dodecyl gallate (E312);

- sodium lactate (E325), potassium lactate (E326) or calcium lactate (E327);

- lecithins (E322);

- natural tocopherols (E306), synthetic $\alpha$-tocopherol (E307), synthetic $\gamma$-tocopherol (E308) and synthetic $\delta$-tocopherol (E309), the tocopherols together constituting vitamin E;

- eugenol, thymol and/or cinnamaldehyde,

- and also a mixture of two or more of said antioxidants.

According to one embodiment of the present invention, the silver ink may also optionally comprise dispersant(s). For example organic dispersants which comprise at least one carbon atom. These organic dispersants may also comprise one or more non-metallic heteroatoms such as a halogenated compound, nitrogen, oxygen, sulfur or silicon. Mention will be made for illustrative purposes of thiols and derivatives thereof, amines and derivatives thereof (for example amino alcohols and amino alcohol ethers), carboxylic acids and carboxylate derivatives thereof, and/or mixtures thereof.

Although this does not constitute a preferred embodiment according to the present invention, the ink composition may also comprise rheology modifiers, for example urea-type rheology modifiers (e.g. modified ureas, polyureas, and/or mixtures thereof) and/or cellulose-type rheology modifiers (e.g. alkylcelluloses (e.g. ethylcellulose), nanocelluloses, nitrocelluloses, and/or mixtures thereof). If present, the total concentration of said rheology modifier(s) in the ink will preferably be less than 5% by weight, less than 1% by weight, less than 0.1% by weight, or even less than 0.01% by weight.

Although this does not constitute a preferred embodiment according to the present invention, the ink compositions may also tolerate the presence of additional compounds, among which mention will be made for illustrative purposes of solvents. For example hydrocarbons; alkanes containing from 5 to 20 carbon atoms, of which mention will be made for illustrative purposes of pentane (C5H12), hexane (C6H14), heptane (C7H16), octane (C8H18), nonane (C9H20), decane (C10H22), undecane (C11H24), dodecane (C12H26), tridecane (C13H28), tetradecane (C14H30), pentadecane (C15H32), cetane (C16H34), heptadecane (C17H36), octadecane (C18H38), nonadecane (C19H40), eicosane (C20H42), cyclopentane (C5H10), cyclohexane (C6H12), methylcyclohexane (C7H14), cycloheptane (C7H14), cyclooctane (C8H16) (preferably when it is not used as compound "b"), cyclononane (C9H18), cyclodecane (C10H20); aromatic hydrocarbons containing from 7 to 18 carbon atoms, of which mention will be made for illustrative purposes of toluene, xylene, ethylbenzene, ethyltoluene; and mixtures thereof. If present, the total concentration of said solvent(s) in the ink will preferably be less than 5% by weight, less than 1% by weight, less than 0.1% by weight, or even less than 0.01% by weight.

According to one embodiment of the present invention, the ink may advantageously be used in spray coating as detailed hereunder.

SPRAY COATING

With the growing demand for advanced computing systems and the increasing power of personal portable devices, front-end manufacturers need to reduce the physical footprint of their chips while integrating more functionality. In accordance with the present invention, the ultrasonic spray technology capable of sputtering a wide variety of materials, while producing a uniform coating layer on the substrate is the preferred technology for coating layers of the claimed ink. The ultrasonic spray technology preferably uses a spray tip (or nozzle) vibrated by an ultrasonic transducer.

As illustrative example, the spray head is preferably an integrated assembly consisting of an ultrasonic transducer with a spray tip, liquid applicator and air directors (adjustable air flow through the air directors determines the velocity of the spray).

The ultrasonic transducer vibrates at an ultrasonic frequency which can advantageously be comprised between 16 kHz and 180 kHz; for example comprised between 20 kHz and 100 kHz; for example comprised between 20 kHz and 60 kHz.

Silver ink is delivered to the spray nozzle on the ultrasonic transducer by a liquid applicator. The silver ink is stored in a reservoir and fed to the liquid applicator at a precisely controlled rate by a positive displacement pump. Ultrasonic vibrations from the spray tip break down the liquid into small drops and propel them out of the tip as a spray. Air directors are used to produce air flows to shape and accelerate the ultrasonically produced spray. The parameters of spray coating are for example Pressure: 40-50 (PSI); head speed: 150-400 (mm/s); height Z = 40 mm; pitch =10 mm; ink throughput: 0.1-3 mL/min; head tilt = 30°; nb layers: 1-4; nb directions: 1-4.

In an embodiment of the present invention, the spray nozzle is able to coat a layer of sprayed material having a thickness comprised between 0.5 and 1.5 microns. For the Electromagnetic Interference shielding on a semiconductor chip application, the thickness of the final ink layer (after curing at 150°C for 30 minutes) is preferably comprised between 1 and 5 microns; representing for example one to five passes of the spray nozzle equipment over the chip.

It is thus obvious to a person skilled in the art that the present invention allows embodiments in numerous other specific forms without, however, departing from the field of application of the invention as claimed. Consequently, the present embodiments should be considered as illustrations, but may be modified in the field defined by the scope of the attached claims.

The present invention and the advantages thereof will now be illustrated by means of the formulations collated in the tables below. The ink formulations were prepared in accordance with the embodiments described above in the description. The chemical compounds used and the properties are indicated in the table.

The stability of the ink as mentioned in the present invention may be measured according to any suitable method. As an example, the measurement of said stability of the ink follows Genes'ink's standard procedure: during stability testing, materials are tested every month (storage under ambient conditions and between 4-5°C) for a total duration of 6 to 12 months. All the characterization methods are performed to validate the stability of said materials, e.g. viscosity, solid content of the ink; as well as the conductivity of the coated samples, etc.

S-CS91547 is a formulation in accordance with the present invention, whereas S-CS91544 and S-CS11520 are formulations given for comparative purposes.

[Tables 1]

| Code | S-C511520 | | S-CS91544 | | S-CS91547 | |
|---|---|---|---|---|---|---|
| | | | EMI shielding | | EMI shielding | |
| | comparative | | comparative | | invention | |
| | Component | % | Component | % | Component | % |
| Ag NPs | Ag NPs | 20 | Ag NPs | 40 | Ag NPs | 40 |
| aliphatic monohydric alcohol | Butanol | 12.9 | Isopropanol | 27.6 | Isopropanol | 27.6 |
| polyol /polyol derivative | Butyl Carbitol | 3.26 | Butyl Carbitol | 6.5 | Butyl Carbitol | 7 |
| polyol /polyol derivative | | | Dowanol DPM | 10.5 | Dowanol DPM | 10.5 |
| polyol /polyol derivative | TEGME | 33.47 | PGMEA | 3.9 | PGMEA | 3.9 |
| Terpineol | Terpineol | 25.25 | Terpineol | 7.9 | Terpineol | 10 |
| Water | Water | 5 | Water | 2.6 | | |
| Adhesion promoter | | | PVP-VA | 1 | PVP-VA | 1 |
| Wetting agent | Edaplan LA 413 | 0.12 | | | | |
| Sum (weight) | | 100.0 | | 100.0 | | 100.0 |

The silver nanoparticles (Ag NPs) are spheroidal and have a D50 of 50 nm.

Butyl carbitol is 2-(2-butoxyethoxy)ethan-1-ol (Diethylene glycol butyl ether).

Dowanol DPM is Dipropylene glycol monomethyl ether.

PGMEA is Propylene glycol methyl ether acetate.

TEGME is Triethylene glycol monomethyl ether.

PVP-VA is a vinylpyrrolidone/vinyl acetate copolymer; it is in particular Ashland™ PVP/VA S-630 copolymer which is a 60:40 linear random copolymer of N-vinyl-2-pyrrolidone and vinyl acetate produced by free-radical polymerization.

[Tables 2]

| Reference | Viscosity (mPa.s) | Surface tension (mN/m) | %Ag by weight | Sheet resistance (mOhm/sq) | Adhesion on EMC chips |
|---|---|---|---|---|---|
| S-CS11520 | 12 ± 2 | 28 ± 2 | 20 | 230 ± 100 | 0B |
| S-CS91544 | 14 ± 2 | 20 ± 2 | 40 | 110 ± 20 | 5B |
| S-CS91547 | 10 ± 2 | 22 ± 2 | 40 | 100 ± 50 | 5B |

The spray coatings were made as follows [Printer: Spray USI Prism 400; Pressure: 50 PSI; head speed: 300 mm/s; height Z: 40 mm; Pitch: 10 mm; ink throughput 0,8 mL/min; head tilt: 30°C; Number of layer: 4, 1 in each direction] on the same EMC chips while the EMC sprayed sample is drying on hot plate at 60°C for 5 min at the same time during the spray process and then cured in a conventional oven at 150°C for 30 min.

The sheet resistance of the ink as mentioned in the present invention may be measured according to any suitable method. As an example, corresponding to the measurements collated in the table, it may be advantageously measured according to the following method on the cured-EMC sprayed sample:

- Machine reference: S302 Resistivity Stand from Microworld

- 4-point head reference SP4-40045TFY (4 equally spaced, co-linear probes)

- Current source reference: Agilent U8001A

- Multimeter reference: Agilent U3400

- Measuring temperature: room temperature

- Tension/resistance conversion coefficient: 4.5324

- A DC current is applied to the outer probes of the measuring head and the resulting voltage between the two other points of the head is raised. Then, the sheet resistance is calculated following this equation:

$$R_S = \frac{\pi}{\ln(2)}\frac{\Delta V}{I} = 4.53236\frac{\Delta V}{I}$$

- Here, Rs is the sheet resistance (in Ohm/square), $\Delta$V is the change in voltage measured between the inner probes (in Volt), and I is the current applied between the outer probes (in Ampere). The coefficient 4.53236 is provided by the notice of use of S302 Resistivity Stand and correspond to $\pi$ / ln (2) = 4.53236.

The content of silver nanoparticles as mentioned in the present invention may be measured according to any suitable method. As an example, corresponding to the measurements collated in the table, it may be advantageously measured according to the following method:

- Thermogravimetric analysis

- Machine: TGA Q50 from TA Instrument

- Crucible: Alumina

- Method: ramp

- Measuring range: from room temperature to 600°C

- Temperature rise: 20°C/min

The viscosity of the ink as mentioned in the present invention may be measured according to any suitable method. As an example, it may be advantageously measured according to the following method:

- Machine: AR-G2 rheometer from TA Instrument
- Conditioning time: Pre-shear at 40 s$^{-1}$ for 1 minute/equilibration for 1 minute
- Test type: Shear stages
- Stages: 40 s$^{-1}$, 100 s$^{-1}$ and 1000 s$^{-1}$
- Duration of a stage: 5 minutes
- Mode: linear
- Measurement: every 10 seconds
- Temperature: 20°C
- Curve reprocessing method: Newtonian
- Reprocessed area: the entire curve

The surface tension as mentioned in the present invention may be measured according to any suitable method. As an example, it may be advantageously measured according to the following hanging drop method:
This measurement is performed with the DataPhysics OCA 15 plus device equipped with a camera. This apparatus allows to measure surface tension range given by the manufacturer from 0.01 to 2000 mN/m $\pm$ 0.05 mN/m. The method is Pendant drop left.

During the measurement of a surface tension, a drop of the solution to analyze is produced in the air from a needle connected to a syringe. An automatic system allows to control the push on the syringe plunger. The shape of the drops or a series of drops is then recorded by a camera. Then, from these images, the software calculates the surface tension.

The surface tension $\gamma$ (N.m$^{-1}$) is then given by the following formula (simplified Laplace-Young equation):

$$\gamma = \Delta\rho \, g \, d^2 \, / \, H$$

With :

$\Delta\rho$ (kg.m$^{-3}$) : density difference between the liquid of the drop and the surrounding phase

g (acceleration of gravity at the surface of the Earth) : 9.81 m.s$^{-2}$

d (m) : equatorial diameter

H : shape factor

1/H is a function of S = ds/de where ds is the diameter measured at a distance of de from the bottom of the drop.

- Machine: OCA 15 from DataPhysics

- Method:

- Pendant drop (left)

- Measuring volume: 0.2 $\mu$L

- Flow rate: 0.5 $\mu$L/s

- 1.65 mm needle

- Enter the ink density: 1.1675

- Measurement: Ink volume: 1 mL of ink/number of measurements = 4

The adhesion test as mentioned in the present invention may be measured according to any suitable method. As an example, it may be advantageously measured according to the following simplified version of the ASTM D3359 standard. Using the diamond tip pen and metal ruler, parallel and perpendicular cuts are made to form a grid pattern. The pen is held between 15° and 30° to the plate. Use sufficient force to reach the surface of the substrate when cutting. The ruler should be positioned on the uncut portion of the surface. The reference tape is 3M610 (12.7mm; 4.7N/cm). Cut a piece of tape approximately 75 mm long, and place the center of the tape on the grid, then spread it over the surface. Leave a free area so that the tape can be removed easily. Press the tape firmly with your finger to adhere to the entire surface. Wait 90 $\pm$ 30 seconds (use a stopwatch). Remove the tape quickly without tearing by making an angle close to 180° with the substrate. The result is noted from 0B to 5B according to the scale of the standard: 0B being 100% of coating removed and 5B being 0% of coating removed.

Excellent conductivity for annealing temperatures generally between 120°C and 220°C as reflected by the sheet resistance measurement

The ink compositions according to one variant of the present invention are characterized in that their sheet resistance property value is less than 350 mohms/sq for thicknesses of less than or equal to 500 nm (annealing temperature of 150°C).

The thickness as mentioned in the present invention may be measured according to any suitable method. As an example, its measurement may be advantageously performed with a 1D mechanical profilometer, model Alpha Step IQ (KLA Tencor). Draw a straight line through the location of the square resistance measurements using a metal clamp. Measurement method: make the measurements using the default settings (Range: 20 $\mu$m, Length: 500 $\mu$m, Speed: 50

μm/s, Frequency: 50 Hz, Duration: 1 time, 2 deposits). Electrical resistivity (μΩ.cm) = R□ (μΩ /sq) x thickness (cm).

A comparison of the spray coatings made with the above formulations represents a good example of visualization of the advantages afforded by the present invention; specifically, a marked improvement in the homogeneity of the sprayed formulation S-CS91547 relative to that of S-CS91544 is observed.

Said visual observation is also confirmed by microscopic observation: Deposits are observed using the Dino-Lite Edge AM4000 digital microscope which allows to measure on a range from x650 to x950 (1280*1024 pixels). The microscope has only one zoom and the focal length is to be adjusted to obtain a clear image. The microscopic images of S-CS91544 deposits show bigger droplets of inks that are not completely coalesced with larger empty space between the droplets compared to the S-CS91547 deposits.

## Claims

1. Ink composition comprising at least

   • 25% by weight of silver nanoparticles,
   • 15% by weight of aliphatic monohydric alcohol,
   • 10% by weight of polyol and/or polyol derivative, and
   • 5% by weight of terpenic alcohol,
   less than 0.5% by weight of water, and
   the sum of silver nanoparticles, aliphatic monohydric alcohol, polyol and polyol derivative, terpenic alcohol and water constituting at least 90% by weight of the ink composition.

2. Ink composition comprising at least

   • 25% by weight of silver nanoparticles,
   • 15% by weight of aliphatic monohydric alcohol,
   • 10% by weight of polyol and/or polyol derivative,
   • 5% by weight of terpenic alcohol, and
   • 0.5% by weight of vinylpyrrolidone/vinyl acetate copolymer,
   less than 0.5% by weight of water, and
   the sum of silver nanoparticles, aliphatic monohydric alcohol, polyol and polyol derivative, terpenic alcohol, vinylpyrrolidone/vinyl acetate copolymer and water constituting at least 95% by weight of the ink composition.

3. Ink composition according to any of the preceding claims wherein the viscosity measured at 20°C of the ink is between 5 and 100 mPa.s.

4. Ink composition according to any of the preceding claims wherein the silver nanoparticles are spheroidal and have D50 values of between 10 and 150 nm.

5. Ink composition according to any of the preceding claims wherein the aliphatic monohydric alcohol is isopropanol.

6. Ink composition according to any of the preceding claims wherein the polyol and/or polyol derivative consists in a mixture of glycol ether(s) and glycol ether acetate(s).

7. Ink composition according to any of the preceding claims wherein the polyol and/or polyol derivative consists in a mixture of dipropylene glycol monomethyl ether, 2-(2-butoxyethoxy)ethan-1-ol and propylene glycol methyl ether acetate.

8. Ink composition according to any of the preceding claims wherein the terpenic alcohol is terpineol.

9. Ink composition according to any of the preceding claims wherein the vinylpyrrolidone/vinyl acetate copolymer is a 30:70 to 70:30 monomer ratio linear random copolymer of N-vinyl-2-pyrrolidone and vinyl acetate.

10. Ink composition according to any of the preceding claims wherein the water content in the ink composition according to the present invention is less than 0.25% by weight, for example less than 0.1% by weight or even nil.

11. Use of an ink composition according to any of the preceding claims as Electromagnetic Interference shielding by spraying it on a semiconductor chip.

12. Use of an ink composition according to any of the preceding claims as Electromagnetic Interference shielding by spraying it on Epoxy Molding Compound-chip.

13. Use of an ink composition according to any of the preceding claims as Electromagnetic Interference shielding by spraying it on a semiconductor chip with an ultrasonic spray nozzle.

14. Use of an ink composition according to the preceding claim wherein an ultrasonic transducer of the ultrasonic spray nozzle vibrates at an ultrasonic frequency comprised between 20 kHz and 60 kHz.

15. Sprayed Epoxy Molding Compound chip by use of an ink according to any of the preceding claims said chip after curing at 150°C for 30 minutes having a final ink layer thickness comprised between 1 and 5 microns.

FIGURE 1

FIGURE 2

FIGURE 3

Europäisches
Patentamt

European
Patent Office

Office européen
des brevets

**EUROPEAN SEARCH REPORT**

Application Number

EP 22 31 5338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/025200 A1 (LIMAGE STEPHANIE [FR] ET AL) 27 January 2022 (2022-01-27) * claims 1 + 3-8 + 11 + 14 + 16; par. 78 + 101; tables 1-3 * | 1-15 | INV. C09D11/52 C09D11/033 C09D11/037 |
| X | WO 2015/151941 A1 (DAICEL CORP [JP]) 8 October 2015 (2015-10-08) * claims 1 ff; par. 110 + 112 + 116 + 130; examples 1+ 2 * | 1-15 | |
| X | WO 2019/225271 A1 (DAICEL CORP [JP]) 28 November 2019 (2019-11-28) * claims 1 ff; par. 107  + 129 + 133-137 + 134-145; table 1 * | 1-15 | |

TECHNICAL FIELDS
SEARCHED      (IPC)

C09D

The present search report has been drawn up for all claims

| Place of search | Date of completion of the search | Examiner |
|---|---|---|
| Munich | 16 May 2023 | von Zitzewitz, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 31 5338

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2023

| Patent document cited in search report | | Publication date | Patent family member(s) | | Publication date |
|---|---|---|---|---|---|
| US 2022025200 | A1 | 27-01-2022 | CA | 3122633 A1 | 18-06-2020 |
| | | | CN | 113227271 A | 06-08-2021 |
| | | | EP | 3894490 A1 | 20-10-2021 |
| | | | FR | 3090002 A1 | 19-06-2020 |
| | | | IL | 283532 A | 29-07-2021 |
| | | | JP | 2022512412 A | 03-02-2022 |
| | | | KR | 20210102340 A | 19-08-2021 |
| | | | SG | 11202106156R A | 29-07-2021 |
| | | | TW | 202030279 A | 16-08-2020 |
| | | | US | 2022025200 A1 | 27-01-2022 |
| | | | WO | 2020120252 A1 | 18-06-2020 |
| WO 2015151941 | A1 | 08-10-2015 | JP | 6532862 B2 | 19-06-2019 |
| | | | JP | WO2015151941 A1 | 13-04-2017 |
| | | | TW | 201546200 A | 16-12-2015 |
| | | | WO | 2015151941 A1 | 08-10-2015 |
| WO 2019225271 | A1 | 28-11-2019 | CN | 112189039 A | 05-01-2021 |
| | | | JP | WO2019225271 A1 | 17-06-2021 |
| | | | KR | 20210013108 A | 03-02-2021 |
| | | | TW | 202003725 A | 16-01-2020 |
| | | | WO | 2019225271 A1 | 28-11-2019 |

EPO FORM P0459

For more details about this annex : see Official Journal of the European Patent Office, No. 12/82

**EP 4 389 835 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20160184979 A1
- WO 2020120252 A1
- WO 2016184979 A
- WO 2020120252 A